# EUROPEAN PATENT APPLICATION

(11) **EP 4 657 153 A1**
(43) Date of publication of application: **03.12.2025**
(21) Application number: 25179066.3
(22) Date of filing: 27.05.2025
(51) Int. Cl.: G03B 17/56, F16M 13/02, G08B 13/196, H04N 23/51

(54) **STRUCTURE FOR AND METHOD OF INSTALLING CAMERA**

(30) Priority: 28.05.2024 KR 20240069343
(71) Applicant: Hanwha Vision Co., Ltd., Seongnam-si, Gyeonggi-do 13488 (KR)
(72) Inventor: Fujiwara, Masao, 13488 Seongnam-si, Gyeonggi-do (KR); Chang, Tae Kyun, 13488 Seongnam-si, Gyeonggi-do (KR)
(74) Representative: Gulde & Partner

(57) **Abstract**

A structure (1) for installing a camera includes: a housing (100); a wing portion (300) connected to the housing (100); and a fixer (200) configured to be coupled to the housing (100), where the housing (100) includes: an embedded portion (110) insertable into an opening (H) of an installation target plate (P); and an outer surface support frame (130) protruding from the embedded portion (110) and configured to support an outer frame of the installation target plate (P), where the wing portion (300) includes: a wing portion body (320); an interposition portion (330) connected to a first end of the wing portion body (320); and an inner surface support frame (340) connected to a second end of the wing portion body (320) and configured to support an inner frame of the installation target plate (P).

## Description

### BACKGROUND

### 1. Field

The disclosure relates to a structure for and method of installing a camera.

### 2. Description of the Related Art

A camera installed on a wall or ceiling of a building may be used to collect videos for purposes such as safety, security, and service improvement. When installing a camera, there are cases where the camera may be embedded in an installation target plate, such as a wall or ceiling. This approach has been frequently used recently because it may minimize the exposure of a camera and other mounting structure, thereby providing a visually uncluttered look and freeing up space.

When installing a camera on an installation target plate, a separate tool has been used to fix a housing to the installation target plate. For example, a process of rotating a plurality of screws by using a screwdriver may be required. In other words, a separate tool such as a screwdriver may be required to install a camera, and thus, the installation process may be time-consuming.

The above-described background art constitutes technical information that the inventor possessed to derive the disclosure or acquired in the process of deriving the disclosure, and thus cannot necessarily be considered publicly known prior art disclosed to the general public prior to the filing of the disclosure.

### SUMMARY

Provided is a structure for and method of installing a camera, wherein the structure includes a housing that may be easily fixed to an installation target plate without using a separate tool.

Additional aspects will be set forth in part in the description which follows and, in part, will be apparent from the description, or may be learned by practice of the presented embodiments of the disclosure.

According to an aspect of the disclosure, a structure for installing a camera includes: a housing; a wing portion connected to the housing; and a fixer configured to be coupled to the housing. The housing includes: a casing insertable into an opening of an installation target plate; and an outer surface support frame protruding from the casing and configured to press an outer frame of the installation target plate The wing portion includes: a wing portion body; an interposition portion connected to a first end of the wing portion body; and an inner surface support frame. The inner surface support frame is connected to a second end of the wing portion body. The inner surface support frame is configured to support or press an inner frame of the installation target plate. **In** a state in which the casing is inserted into the opening of the installation target plate, the housing is coupled to the fixer, the interposition portion is between the fixer and the housing, and the outer surface support frame and the inner surface support frame press the installation target plate.

The housing may further include: a first coupling portion including a hole at a first end of the casing. A cross-section of the hole of the first coupling portion may be smaller than a cross-section of a second end of the casing.

The fixer may include: a second coupling portion including a protrusion. The protrusion may be configured to pass through the hole of the first coupling portion. The protrusion may be configured to couple with the first coupling portion. The fixer may include a knob at a base of the second coupling portion and having a cross-section that may be larger than a cross-section of the second coupling portion.

In a state in which the second coupling portion is being coupled with the first coupling portion, for example while the second coupling portion is being coupled with the first coupling portion, the knob may be configured to move away from the installation target plate.

The first coupling portion may be configured to be screw-coupled with the second coupling portion. In a state in which the fixer is rotated or is being in a first direction, for example while rotating the fixer in the first direction, the knob may be configured to move away from the installation target plate.

The fixer may include a hole therethrough in coupling direction. The hole may be a through hole.

The wing portion may further include a shaft. The shaft may be connected to the housing. The wing portion may be configured to be rotatable about the shaft.

The wing portion may further include: a shaft connected to the housing. The shaft may be the previously mentioned shaft. The wing portion body may be connected to a first end or first side of the shaft. The wing portion body may extend outwardly from the housing. The interposition portion may be connected to a second end or second side of the shaft. The interposition portion may protrude inwardly from the housing. The first end or side may be opposite to the second end or side.

The inner surface support frame may be bent from the wing portion body at an obtuse angle with respect to the wing portion body. The angle may be larger than 90 ° and for example up to 100 °, up to 110 °, up to 120 °, up to 130 °, up to 140 °, up to 150 °, up to 160 °, up to 170 ° or less than up to 180 °.

The inner surface support frame may include a rounded portion connected to the wing portion body.

The knob may be integrally formed with the second coupling portion.

A cross-section of the outer surface support frame may be larger than a cross-section of the opening of the installation target plate.

Based on or due to the fixer pressing on the first end of the wing portion, a second end of the wing portion may press an inner surface of the installation target plate, and or such that an end of the housing may be pressed on an outer surface of the installation target plate.

According to another aspect of the disclosure, a structure for installing a camera may include: a housing including a casing configured to be inserted into an opening of an installation target plate; a rotatable wing portion connected to the housing; and a fixer coupled to the housing with a first end of the wing portion therebetween. Based on the fixer pressing on the first end of the wing portion, a second end of the wing portion may press an inner surface of the installation target plate, and an end of the housing is pressed on an outer surface of the installation target plate.

The housing may further include: a first coupling portion including a hole at a first end of the casing. A cross-section of the hole of the first coupling portion may be smaller than a cross-section of a second end of the casing.

The fixer may include: a second coupling portion including a protrusion. The protrusion may be configured to pass through the hole of the first coupling portion. The protrusion may be configured to couple with the first coupling portion. The fixer may include a knob at a base of the second coupling portion. The know may have a cross-section that is larger than a cross-section of the second coupling portion.

In a state in which the first coupling portion of the housing and the second coupling portion of the fixer are coupled to each other, based on or due to the knob of the fixer pressing on the interposition portion of the wing portion, the wing portion may rotate in a second direction and an inner surface support frame of the wing portion may presse an inner surface of the installation target plate, the outer surface support frame of the housing may press the outer surface of the installation target plate, and or such that the housing may be fixed to the installation target plate.

According to yet another aspect of the disclosure, a method of installing a camera may include: inserting a casing of a housing into an opening of an installation target plate until an outer surface support frame of the housing contacts an outer surface of the installation target plate, and rotating a wing portion toward the opening of the installation target plate; and coupling a fixer to the housing until an inner surface support frame of the wing portion supports or presses an inner surface of the installation target plate and the outer surface support frame supports or presses the outer surface of the installation target plate, wherein an interposition portion of the wing portion is located between the fixer and the housing.

According to yet another aspect of the disclosure, a method of installing a structure for installing a camera, comprises inserting a casing of a housing of the structure into an opening of an installation target plate until an outer surface support frame of the housing contacts an outer surface of the installation target plate, and rotating a wing portion of the structure toward the opening of the installation target plate; and coupling a fixer of the structure to the housing until an inner surface support frame of the wing portion supports or presses an inner surface of the installation target plate and the outer surface support frame supports or presses the outer surface of the installation target plate, wherein an interposition portion of the wing portion is located between the fixer and the housing. For all aspects and embodiments disclosed, the fixer may also be designated fixing element.

According to yet another aspect of the disclosure, a structure for installing a camera may include: a housing inserted into an installation target plate; a wing portion connected to the housing; and a fixer configured to couple to the housing. The housing may include: an outer surface support frame that may protrude from a base of the housing and that may be configured to press an outer frame of the installation target plate. The wing portion may include: a wing portion body rotatable around a shaft; an interposition portion connected to a first end of the wing portion body with respect to the shaft; and an inner surface support frame connected to a second end of the wing portion body with respect to the shaft and configured to press an inner frame of the installation target plate. Based on or due to the fixer being coupled to the housing, the interposition portion may be between the fixer and the housing, and the outer surface support frame and the inner surface support frame may press the installation target plate, e.g. according to a pressing of the interposition portion by the fixer.

### BRIEF DESCRIPTION OF DRAWINGS

The above and other aspects, features, and advantages of certain embodiments of the disclosure will be more apparent from the following description taken in conjunction with the accompanying schematic drawings, in which:
FIG. 1 is a perspective view showing a structure for installing a camera according to an embodiment;
FIG. 2 is an exploded front view showing the structure for installing a camera according to an embodiment;
FIG. 3 is a cross-sectional view of the structure taken along line I-I' of FIG. 1, showing a state in which the structure for installing a camera is installed on an installation target plate according to an embodiment;
FIG. 4 is a perspective view showing a fixing part according to an embodiment;
FIG. 5 is a front view showing a wing portion according to an embodiment;
FIGS. 6A, 6B, and 6C are front views respectively showing three states in which the structure for installing a camera is installed on three installation target plates having different thicknesses according to one or more embodiments;
FIGS. 7A and 7B are enlarged views of portions II and III of FIG. 3, respectively, illustrating forces acting when the structure for installing a camera is completely fixed to the installation target plate according to one or more embodiments;
FIG. 8 is a front view showing a wing portion according to an embodiment;
FIG. 9 is a perspective view showing a wing portion having an elastic member according to an embodiment;
FIG. 10 is a perspective view showing a structure for installing a camera according to an embodiment;
FIG. 11 is a perspective view showing a fixed part having a second unidirectional rotation member according to an embodiment;
FIG. 12 is a cross-sectional view of the structure taken along line IV-IV' of FIG. 10, and illustrates an operating principle of a first unidirectional rotating member and a second unidirectional rotating member according to an embodiment;
FIG. 13 is a flowchart illustrating a method of installing a camera according to an embodiment; and
FIGS. 14A, 14B, 14C, and 14D schematically illustrate processes of installing the structure for installing a camera on an installation target plate according to an embodiment.

### DETAILED DESCRIPTION

Embodiments of the disclosure can be understood by reference to the description and drawings. The described embodiments may have various modifications and be implemented in different forms and are not limited to the embodiments described herein. Additionally, the individual features of the various embodiments of the disclosure may be combined in part or in whole with each other. Each embodiment may be implemented independently of one another or in relation to one another. The described embodiments are provided by way of example only so that the disclosure will be thorough and complete, and will fully convey the scope of the disclosure to those skilled in the art. The disclosure may be replaced with all modifications and substitutions within the technical scope of the disclosure. Accordingly, processes, elements, and techniques that are not necessary for a person having ordinary skill in the art to fully understand the embodiments of the disclosure may not be described.

Unless otherwise stated throughout the attached drawings and specification, the same reference numerals, letters or combinations thereof indicate the same components, and thus redundant descriptions are omitted. Additionally, in order to clearly explain the disclosure, parts unrelated to the explanation have been omitted.

The relative sizes of elements, layers, and regions in the drawings may be exaggerated for clarity. The use of hatching and/or shading in the attached drawings is generally provided to clarify boundaries between adjacent elements. Therefore, the presence or absence of hatching or shading does not imply any desirable form or requirement for any particular material, material property, dimension, proportion, commonality between figure elements, and/or any other characteristic, property, or attribute of the elements unless otherwise specified.

Various embodiments are described herein with reference to cross-sectional examples which are schematic illustrations of embodiments and/or intermediate structures. Therefore, the appearance of the drawing may vary, for example, as a result of manufacturing techniques and/or tolerances. In addition, the specific structural or functional descriptions disclosed in this specification are merely examples for explaining embodiments according to the concept of the disclosure. Therefore, the embodiments disclosed in this specification should not be construed as being limited to the shape of the illustrated region, and include, for example, shape deviations due to manufacturing.

The areas depicted in the drawings are schematic in nature and their shapes are not intended to be limiting and are not intended to illustrate the actual shape of the device area. Furthermore, as will be appreciated by those skilled in the art, the described embodiments may be modified in various ways without departing from the spirit or scope of the disclosure.

Numerous specific details are set forth in the specification to provide a thorough understanding of the various embodiments. However, various embodiments may be practiced without these specific details or including one or more of these details. In other cases, well-known structures and devices are shown in block diagram form to avoid unnecessarily obscuring the various embodiments.

For the purpose of making the explanation herein easier to understand, spatially relative terms such as "below," "above," "lower," "upper," etc. may be used to describe the relationship of one element or feature to another, as illustrated in the drawings. Spatially relative terms are intended to encompass various orientations of the device in use or operation in addition to those depicted in the drawings. For example, if a device in a drawing is flipped, an element or feature described as "below" or "below" would face "above" the other element or feature. Thus, as exemplary terms, "below" and "lower" may include both upward and downward directions. The device may be oriented in other directions (e.g., rotated 90 degrees or in other directions) and any spatially relative descriptions used herein should be interpreted accordingly. Likewise, when it is stated that a first part is positioned "above" a second part, this means that the first part is positioned above or below the second part.

Also, the expression "in a plan view" means a view when an object is viewed from above (e.g., along the z-axis), and the expression "in a schematic cross-section" means a schematic cross section taken by cutting the object vertically. The term "side view" means that a first object may be above, below, or to a side of a second object, or vice versa. Additionally, the term "overlap" or "superimposition" may include layer, laminate, surface, extension, covering, or partially covering or any other suitable term understood and understood by a person having ordinary skill in the art. The expression "non-overlapping" may include meanings such as "apart from" or "separated from" and any other suitable equivalents recognized and understood by a person having ordinary skill in the art. The terms "face" and "surface" may mean that a first object may directly or indirectly face a second object. When a third object is between a first object and a second object, the first object and the second object face each other but may be understood as indirectly opposing each other.

When an element, layer, region, or component is referred to as being "formed by," "connected to," or "joined to" another element, layer, region or component, it may be formed directly by the element, layer, region or component, formed by the other element, layer, region or component, or indirectly formed by, connected to, or joined to the other element, layer, region or component. Additionally, "formed", "connected" or "coupled" may collectively refer to the direct or indirect joining or connecting of elements, layers, regions or components, and to integral or non-integral joining or connecting, such that one or more elements, layers, regions or components may be present. For example, when an element, layer, region, or component is referred to as being "electrically connected" or "electrically coupled" to another element, layer, region or component, it may be directly electrically connected or coupled to the other element, layer, region or component, or other elements, layers, regions or components may be present. However, "directly connected" or "directly coupled" means that one component is directly connected or coupled to another component without any intermediate components, or is directly on another component without any intermediate components. Also, in the specification, when a part of a layer, film, region, guide plate, or the like is formed on another part, the forming direction is not limited to an upper direction and includes a case where the part is formed on a side or lower portion. Conversely, when a part of a layer, film, region, guide plate, etc. is formed "underneath" another part, this includes not only the case where the part is "directly under" the other part, but also the case where there is another part between the part and the other part. Meanwhile, other expressions that describe relationships between components, such as "between", "right between", or "adjacent to" and "right adjacent to", may be interpreted similarly. Additionally, when an element or layer is referred to as being "between" two elements or layers, it may be the only element between the two elements or layers, or there may be other elements between them.

For the purpose of the specification, expressions such as "at least one or more" or "any one" may not limit the order of individual elements. For example, "at least one of X, Y, and Z," "at least one of X, Y or Z," and "at least one selected from the group consisting of X, Y, and Z," may include any number of either X alone, Y alone, Z alone, or any combination of two or more of X, Y, and Z. Similarly, expressions such as "at least one of A and B" and "at least one of A or B" may include A, B, or both A and B. In the specification, the term "and/or" generally may include all combinations of one or more relevant listed items. For example, an expression such as "A and/or B" may include A, B, or both A and B.

Although the terms "first," "second," "third," and the like may be used in the specification to describe various elements, components, regions, layers, and/or cross-sections, such elements, components, regions, layers, and/or cross-sections may not be limited by these terms, these terms are used to distinguish one element, component, region, layer, or cross-section from another element, component, region, layer, or cross-section. Accordingly, a first element, component, region, layer, or cross-section described below may be referred to as a second element, component, region, layer, or cross-section without departing from the spirit and scope of the disclosure. Describing an element as a "first" element may not require or imply the presence of a second element or other elements. The terms "first," "second," etc. may also be used herein to distinguish different categories or sets of elements. For clarity, the terms "first", "second", etc. may represent "first category (or first set)", "second category (or second set)", etc., respectively.

The terms used in the application are merely used to describe specific embodiments and are not intended to limit the disclosure. As used in the specification, singular expressions are intended to include plural forms, and plural forms are also intended to include singular forms unless clearly indicated otherwise by context. The terms "include", "comprise", "have" and the like, when used in the specification, mean the presence of the specified features, integers, or steps. These expressions do not exclude the presence or addition of one or more other features, steps, operations, components and/or groups thereof.

When one or more embodiments are implemented differently, specific process orders may be performed in an order different from the order described. For example, two processes described sequentially may be performed substantially simultaneously or in the reverse order from that described.

The terms "substantially", "approximately", "about", and similar terms are not used as degree terms but as approximate terms, and mean that they satisfy a range of inherent variations, such as variation ranges due to limitations of measurement systems, in measured or calculated values. For example, "about" may mean within one or more standard deviations, or within ±30%, 20%, 10%, or 5% of a stated value.

Unless otherwise defined, all terms used herein, including technical or scientific terms, have the same meaning as commonly understood by a person having ordinary skill in the art to which the disclosure belongs. Terms defined in commonly used dictionaries should be interpreted to have a meaning consistent with their meaning in the context of the relevant art and/or the specification, and will not be interpreted in an idealized or overly formal sense unless expressly defined herein.

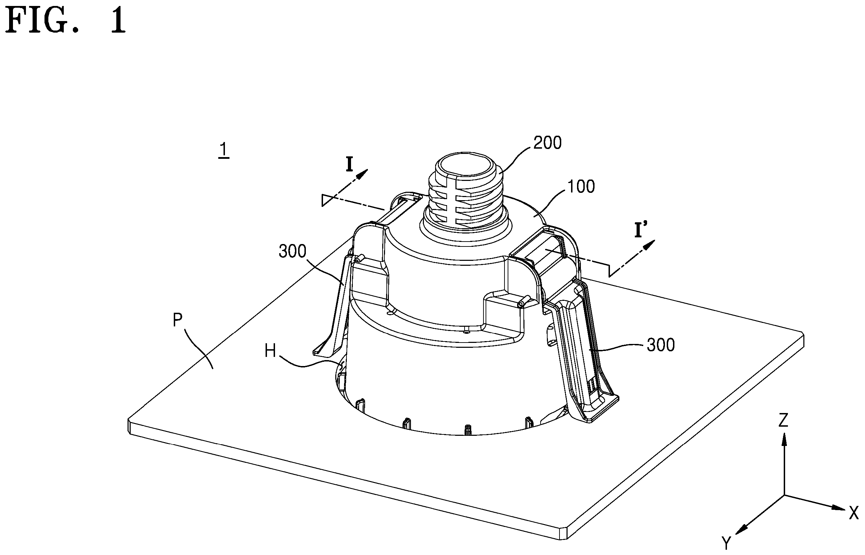

Hereinafter, a structure for and method of installing a camera according to embodiments will be described with reference to FIGS. 1 to 14D.

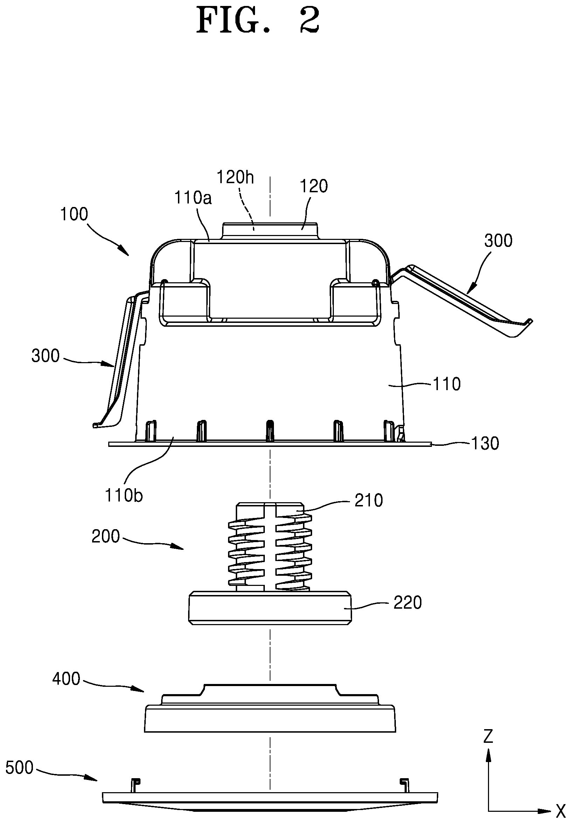

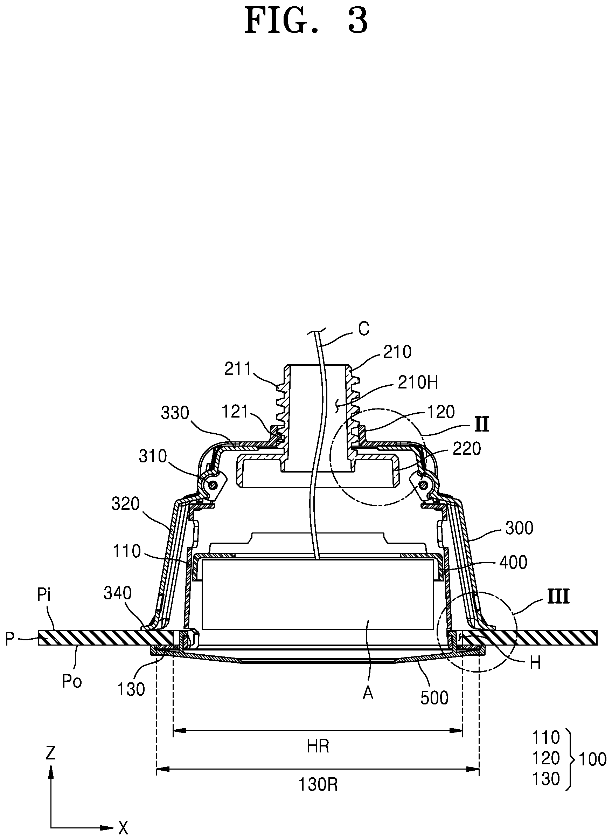

FIG. 1 is a perspective view showing a structure 1 for installing a camera according to an embodiment. FIG. 2 is an exploded front view showing the structure 1 for installing a camera according to an embodiment. FIG. 3 is a cross-sectional view of the structure 1 taken along line I-I' of FIG. 1, showing a state in which the structure 1 for installing a camera according to the embodiments is installed on an installation target plate P.

The structure 1 for installing a camera refers to a structure in which a camera A may be embedded and the structure may be installed on the installation target plate P. The camera A may include any device that produces instantaneous or continuous image data. The same is stated in the following specification. The installation target plate P may include a plate shape having a thickness and an opening H. In an embodiment, the installation target plate P may be a ceiling or wall inside a building or may be a part of a structure such as a means of transportation. However, this is only an example, and the installation target plate P may correspond to any location where the camera A may be installed. Referring to FIG. 1, the structure 1 for installing a camera may include a housing 100, a fixer 200, a wing portion 300, a spacer 400, and a cover 500.

The housing 100 may serve to fix the camera A to the installation target plate P by being at least partially embedded or arranged in and fixed to the installation target plate P. The housing 100 may include an embedded portion 110, a first coupling portion 120, and an outer surface support frame 130. For example, the housing 100 and e.g. its embedded portion 110 may be inserted into the opening H to be at least partially embedded or arranged in and fixed to the installation target plate P.

The embedded portion 110 may be inserted into the opening H of the installation target plate P. Referring to FIG. 2, the embedded portion 110 may be hollow inside. The size of the cross-section or outer diameter of the embedded portion 110 parallel to the installation target plate P may be smaller than the cross-section or inner diameter of the opening H of the installation target plate P. A first end 110a of the embedded portion 110 may have the first coupling portion 120 to be described later. The first end 110a of the embedded portion 110 may indicate an end portion in a Z-axis direction in the drawing. When installing the structure 1, the Z-axis may be perpendicular to the installation target plate P and/or to the opening H. The first end 110a of the embedded portion 110 may be inserted first when the embedded portion 110 is inserted into the opening H of the installation target plate P, e.g. along the Z-axis. The wing portion 300, which will be described later, may be connected to a side of the embedded portion 110.

A second end 110b of the embedded portion 110 may be open-ended. The second end 110b may open away from the first end 110a. The second end 110b of the embedded portion 110 may indicate an end portion in a direction opposite to the Z-axis in the drawing. The second end 110b of the embedded portion 110 may be a portion that comes into contact with parts of sections of the installation target plate P forming or surrounding the opening H when the embedded portion 110 has been fully inserted into the opening H of the installation target plate P. Through the second end 110b of the embedded portion 110, the fixer 200, the spacer 400, and the camera A described later may be inserted into the interior of the embedded portion 110.

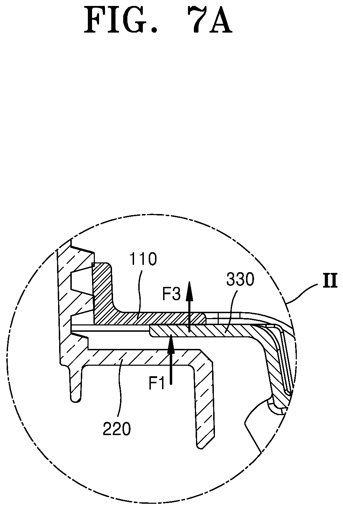

The first coupling portion 120 may serve to couple the housing 100 and the fixer 200, which will be described later. The first coupling portion 120 may be at the first end 110a of the embedded portion 110. The first coupling portion 120 may include a hole 120h. A cross-sectional size of the hole 120h of the first coupling portion 120 may be smaller than that of the second end 110b of the embedded portion 110. Accordingly, a fixer 200 to be described later, may be inserted into the second end 110b of the embedded portion 110 and coupled to the first coupling portion 120, and at the same time, may apply a pushing force F1 to an interposition portion 330 to be also described later with respect e.g. to figure 7A.

The first coupling portion 120 and a second coupling portion 210 to be described later may be coupled by penetration of the second coupling portion 210 through the hole 120h of the first coupling portion 120. In an embodiment, a thread 121, e.g. an internal thread, may be provided on an inner circumferential surface of the first coupling portion 120. The second coupling portion 210 may comprise a thread 211, e.g. an external thread, on its outer circumferential surface. The threads 121, 211 may be matching threads. Accordingly, the first coupling portion 120 and the second coupling portion 210 may be screw-coupled.

The outer surface support frame 130 may serve to support or contact an outer surface Po of the installation target plate P so that the housing 100 may be fixed to the installation target plate P. The outer surface support frame 130 may protrude outward in all directions from the second end 110b of the embedded portion, the directions pointing in parallel with the installation target plate P and/or perpendicular to the Z-axis. Referring to FIG. 3, an outer diameter 130R of the outer surface support frame 130 may be greater than an inner diameter HR of the opening H of the installation target plate P. Accordingly, the outer surface support frame 130 may support or contact the outer surface Po of the installation target plate without being inserted into the opening H of the installation target plate P. The outer diameter 130R and a thickness of a cross-sectional thickness of the outer surface support frame 130 in a z-axis direction are not particularly limited.

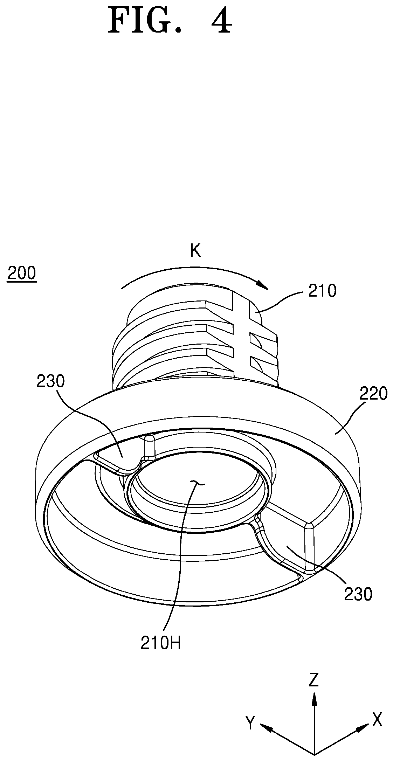

FIG. 4 is a perspective view showing the fixer 200 according to an embodiment.

The fixer 200 may serve to fix the housing 100 to the installation target plate P by applying a force to the housing 100 and the wing portion 300 to be described later. The fixer 200 may be coupled to the housing 100. The fixer 200 may be coupled to the housing 100 with a first end of the wing portion 300 located therebetween. The fixer 200 may include the second coupling portion 210, a knob 220, and a rotation handle 230. The knob 220 may cantilever, overhang, protrude or project from the second coupling portion 210, e.g. perpendicular to the Z-axis, and/or may at least partly or completely circulate or surround the second coupling portion 210.

The second coupling portion 210 may serve to couple the housing 100 and the fixer 200. The second coupling portion 210 may also be referred to as a protrusion. The second coupling portion 210 may correspond to the first coupling portion 120. An outer circumferential size of the second coupling portion 210 may essentially correspond to an inner circumferential size of the first coupling portion 120. That is, the second coupling portion 210 may penetrate the hole 120h of the first coupling portion 120, whereby the first coupling portion 120 and the second coupling portion 210 may be coupled. In an example, the second coupling portion 210 may include a cylindrical shape.

Referring to FIG. 3, the second coupling portion 210 may include a hole 210H that penetrates in the Z-axis direction. The hole 210H may be a through hole. A cable C that electrically connects the camera A to an external system for controlling the camera A or transmitting and receiving data to and from the camera A, or that supplies power to the camera A, may pass through the hole 210H and be connected to the camera A installed inside the housing 100.

In an embodiment, the thread 211 may be provided on an outer surface of the second coupling portion 210. The thread 211 on the second coupling portion 210 and the thread 121 on the first coupling portion 120 may correspond to each other or may be complementary. Accordingly, the second coupling portion 210 may be screw-coupled to the first coupling portion 120. According to an embodiment, the housing 100 may be screw coupled to the fixer 200 by rotating the fixer 200 in a first direction K. The first direction K is a direction in which the second coupling portion 210 may be rotated to be tightened to the first coupling portion 120. The first direction K may be determined according to directions of the threads 121 and 211. The same is stated in the following specification. The first direction K may extend around the Z-axis.

The knob 220 may serve to apply a force to the first end of the wing portion 300 to be described later. The knob 220 may be connected to the second coupling portion 210. The knob 220 may be coupled to an end of the second coupling portion 210 located inside the housing 100 when the second coupling portion 210 is coupled to the first coupling portion 120. The end of the second coupling portion 210 indicates an end portion in the direction opposite to the direction of the Z-axis in the drawing.

Referring to FIG. 4, the knob 220 may have a cross-section larger than that of the second coupling portion 210. With respect to a plane perpendicular to the Z-axis direction and/or parallel to the installation target plate P, a cross-section of the knob 220 may be larger than that of the second coupling portion 210. Accordingly, when the second coupling portion 210 is coupled to the first coupling portion 120 and moves in the Z-axis direction, the knob 220 connected to the second coupling portion 210 may also move in the Z-axis direction, whereby one side of the knob 220, which protrudes from the second coupling portion 210, may apply the pushing force F1 in the Z-axis direction to a first end of the wing portion 300.

When the fixer 200 is rotated in a first direction K so that the first coupling portion 120 and the second coupling portion 210 are screw-coupled, the knob 220 connected to the second coupling portion 210 may move away from the first end 110a towards the second end 110b and/or away from the installation target plate P together with the second coupling portion 210. In other words, when the fixer 200 is rotated in the first direction K, the knob 220 may move in the Z-axis direction. The knob 220 may apply the pushing force F1 to the first end of the wing portion 300 while moving away from the installation target plate P.

The rotation handle 230 may serve to assist a user in rotating the fixer 200 to couple the fixer 200 to the housing 100. In an example, the rotation handle 230 may be connected to an end of the knob 220. According to an embodiment, the rotation handle 230 may be connected to the end of the knob 220 that faces the opening H of the installation target plate P when the second coupling portion 210 is coupled to the first coupling portion 120. The end of the knob 220 may indicate the end portion in the direction opposite to the Z-axis in the drawing. Accordingly, a user may insert a hand through the second end 110b of the casing and rotate the fixer 200 using the rotation handle 230. A specific shape and number of the rotation handle 230 are not particularly limited.

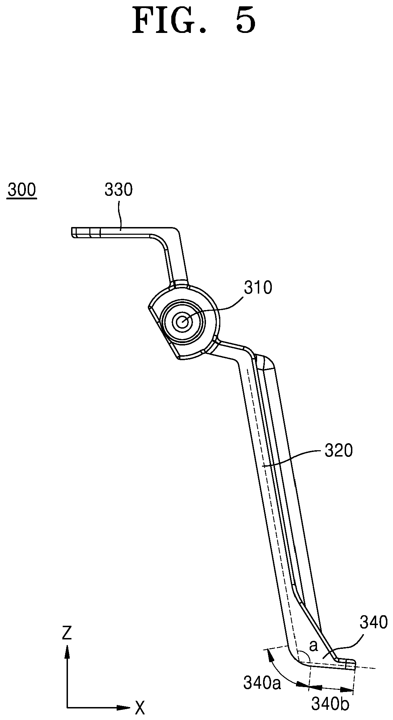

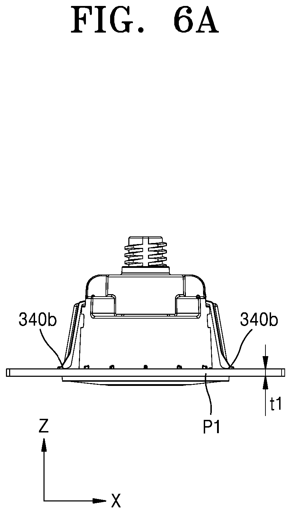

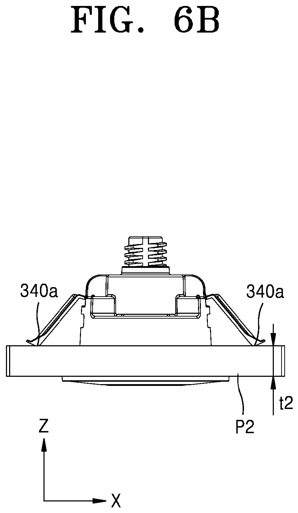

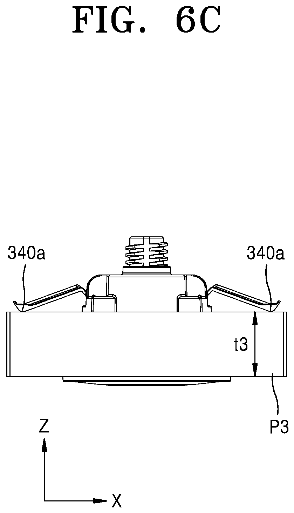

FIG. 5 is a front view showing the wing portion 300 according to an embodiment. FIGS. 6A, 6B, 6C, and 6D are front views showing a state in which the structure 1 for installing a camera A is installed on installation target plates P1, P2, and P3 with different thicknesses, according to one or more embodiments.

The wing portion 300 may serve to support the installation target plate P by receiving force from the fixer 200 so that the housing 100 may be fixed to the installation target plate P. Referring to FIGS. 1 and 2, the wing portion 300 may be connected to the housing 100. The wing portion 300 may be connected to the outer surface of the embedded portion 110.

The wing portion 300 may be plural, i.e. the structure may comprise more than one wing portion 300 and for example two, three, four or more wing portions. A plurality of wing portions 300 may be spaced apart from each other, e.g. in a circumferential direction that circumvents the Z-axis, along the side of the embedded portion 110. Although the drawings show a case where the number of wing portions 300 is two, this is only an embodiment and the number of wing portions 300 is not limited to this.

The wing portion 300 may include a shaft 310, a wing portion body 320, the interposition portion 330, and an inner surface support frame 340.

The shaft 310 connects the wing portion 300 to the housing 100 and may act as a rotation axis of the wing portion 300. For example, the shaft 310 may be connected to the housing 100. Accordingly, the wing portion 300 may be connected to the housing 100.The wing portion 300 may rotate around the shaft 310. For example, the wing portion 300 as a whole may be rotatable around the shaft 310. The wing portion 300 may be rigid. Because the wing portion 300 is rotatable, the force received from the first end of the wing portion 300 may be transmitted to a second end of the wing portion 300.

The wing portion body 320, as shown in FIG. 5, may be connected to a first end or side of the shaft 310. As shown in FIG. 3, the wing portion body 320 may extend outside the housing 100.

The interposition portion 330 may serve to receive the pushing force F1 from the fixer 200 when the fixer 200 is coupled to the housing 100. Referring to FIG. 5, the interposition portion 330 may be connected to the second end or side of the shaft 310. That is, the interposition portion 330 may be connected to the wing portion body 320 with the shaft 310 located between them. In other words, the interposition portion 330 may be connected to one end of the wing portion body 320. As shown in FIG. 3, the interposition portion 330 may protrude into the inside of the housing 100.

The interposition portion 330 may be located between the housing 100 and the fixer 200 when the housing 100 and the fixer 200 are combined. When the second coupling portion 210 is coupled to the first coupling portion 120, the one side of the knob 220 may push the interposition portion 330 in the Z-axis direction and/or towards the second end 110b. In other words, the interposition portion 330 may receive the pushing force F1 from the one side of the knob 220. The pushing force F1 may be transmitted to the inner surface support frame 340, which is the second end of the wing portion 300, by the wing portion body 320.

The inner surface support frame 340 may serve to support or contact or rest on the inner surface Pi of the installation target plate P so that the housing 100 is fixed to the installation target plate P. Referring to FIG. 5, the inner surface support frame 340 may be connected to the other end of the wing portion body 320. As described above, the interposition portion 330 may be connected to the one end of the wing portion body 320, and the inner surface support frame 340 may be connected to the other end of the wing portion body 320.

The inner surface support frame 340 may be bent from the wing portion body 320 to form a predetermined angle a with the wing portion body 320. The angle a formed by the wing portion body 320 and the inner surface support frame 340 may include or be an obtuse angle. Accordingly, when the structure 1 for installing a camera A is installed on the installation target plate P, the inner surface support frame 340 may be stably supported on the inner surface Pi of the installation target plate P.

Referring to FIG. 5, the inner surface support frame 340 may have a first portion 340a connected to the wing portion body 320 that may be rounded. Accordingly, even installation target plates P with different thicknesses can be used for installing the structure 1, as the inner surface support frame 340 may more stably support the inner surface Pi of the installation target plate by securing a contact area between the inner surface support frame 340 and the installation target plate P. In other words, the range of the thickness of installation target plates P on which the structure 1 for installing a camera may be installed may be broadened.

Referring to FIG. 6A, when the structure 1 for installing a camera is installed on the installation target plate P1 having a comparably thin thickness t1, a second portion 340b, which is a flat surface of the inner surface support frame 340, may support or contact or rest on the inner surface Pi of the installation target plate. Referring to FIG. 6B, when the structure 1 for installing a camera is installed on the installation target plate P2 having a thickness t2 greater than t1, the rounded first portion 340a may support or contact or rest on the inner surface Pi of the installation target plate. Referring to FIG. 6C, when the structure 1 for installing a camera is installed on the installation target plate P3 having a thickness t3 greater than t2, the wing portion body 320 may be further spaced apart from the housing 100, and the rounded first portion 340a of the inner surface support frame 340 may support or contact or rest on the inner surface Pi of the installation target plate.

The curvature of the first portion 340a may be determined according to or depend from the lengths of the wing portion body 320 and the inner surface support frame 340, the angle a formed between the wing portion body 320 and the inner surface support frame 340, and the size of the housing 100.

The spacer 400 may serve to assist in fixing the camera A inside the housing 100. The spacer 400 may be fixed inside the embedded portion 110, which may also be designated as casing. The method of fixing the spacer 400 inside the embedded portion 110 is not particularly limited. The spacer 400 may include a surface facing the outside of the installation target plate P and parallel to the installation target plate P. The camera A may be fixed to the surface of the spacer 400.

Referring to FIG. 3, when the spacer 400 is fixed to the housing 100, a portion facing the fixer 200 may be opened. Accordingly, the cable C for electrically connecting the camera A to an external system that controls the camera A or transmits and receives data to and from the camera A, or for supplying power to the camera A, may be connected to the camera A installed on the spacer 400. In addition, when the fixer 200 is coupled to the housing 100, the user's hand may pass through an opened portion of the fixer 200.

In an embodiment, the spacer 400 may be formed integrally with the embedded portion 110. Alternatively, the spacer 400 may be provided separately from the embedded portion 110.

The cover 500 may serve to protect the camera A from the outside. In an embodiment, a first end of the cover 500 may be coupled to the housing 100. In an embodiment, a second end of the cover 500 may include a dome shape.

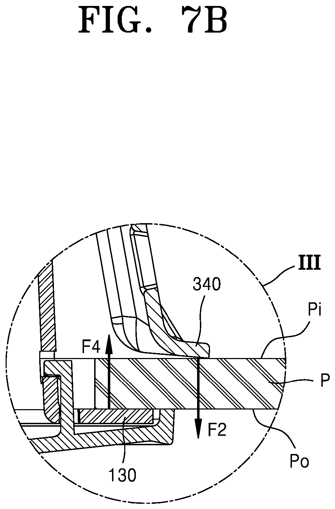

FIGS. 7A and 7B are enlarged views of portions II and III of FIG. 3, respectively, and illustrate forces acting when the structure 1 for installing a camera A according to embodiments is fixed to the installation target plate P.

In the structure 1 for installing a camera A, the housing 100 may be fixed to the installation target plate P by coupling the housing 100 and the fixer 200 together, in a state where a portion of the housing 100 is inserted into the opening H of the installation target plate P. For example, in the structure 1 for installing a camera A, the housing 100 may be fixed to the installation target plate P by coupling the housing 100 and the fixer 200 with the interposition portion 330 therebetween, in a state where the embedded portion 110 is inserted into the opening H of the installation target plate P, such that the outer surface support frame 130 and the inner surface support frame 340 support the installation target plate P.

A more detailed explanation will be provided with reference to FIGS. 3 and 7C, as follows. When the housing 100 and the fixer 200 are coupled together, the fixer 200 may apply the pushing force F1 on the first end of the wing portion 300. In an embodiment, as described above, the housing 100 and the fixer 200 may be coupled by the screw-coupling between the first coupling portion 120 of the housing 100 and a second coupling portion 210 of the fixer 200. The housing 100 may not move in the Z-axis direction because the outer surface support frame 130 is caught on or contacts or rests against the installation target plate P. In this state, when the second coupling portion 210 is rotated in the first direction K to be screw-coupled with the first coupling portion 120, the fixer 200 may move in the Z-axis direction and/or towards the second end 110b.

Meanwhile, referring to FIG. 7A, the first end of the wing portion 300, that is, the interposition portion 330, may be located between the housing 100 and the fixer 200 when the housing 100 and the fixer 200 are coupled, as described above. For example, the interposition portion 330 may be located between the housing 100 and the knob 220 of the fixer 200. The interposition portion 330 located between the housing 100 that cannot move in the Z-axis direction and the knob 220 that moves in the Z-axis direction, may receive the pushing force F1 in the Z-axis direction from the knob 220.

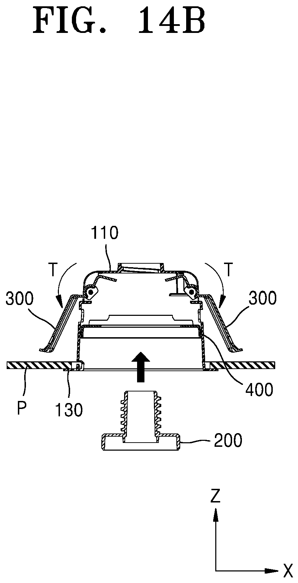

By the pushing force F1, the wing portion 300 may be rotated in a second direction T (shown in figure 14B) until a second end of the wing portion 300 supports or connects or rest on the inner surface Pi of the installation target plate. The second direction Z may extend around the shaft 310. Because the wing portion 300 is rotatable about the shaft 310, the wing portion 300 may rotate in the second direction T by the pushing force F1 applied on the interposition portion 330. Referring to FIG. 7B, as the wing portion 300 rotates, the pushing force F1 applied to the first end of the wing portion 300, that is, the interposition portion 330, may be transmitted by the wing portion body 320 to generate a force F2 by which the second end of the wing portion 300, that is, the inner surface support frame 340, may support the inner surface Pi of the installation target plate.

Meanwhile, referring to FIG. 7A, by the pushing force F1 with which the knob 220 pushes the interposition portion 330, a pushing force F3 may be generated such that the interposition portion 330 pushes the embedded portion 110. Referring to FIG. 7B, since the outer surface support frame 130 is connected to the embedded portion 110, a force F4 by which the outer surface support frame 130 supports the outer surface Po of the installation target plate may be generated by the pushing force F3 applied to the embedded portion 110.

Because the wing portion 300 is connected to the housing 100 by the shaft 310, both the surfaces Pi and Po of the installation target plate may be supported by or pressed between the inner surface support frame 340 of the wing portion 300 and the outer surface support frame 130 of the housing 100, so that the housing 100 may be fixed to the installation target plate P.

In conclusion, the housing 100 may be fixed to the installation target plate P by an end of the housing 100 supporting the outer surface Po of the installation target plate and a second end of the wing portion 300 supporting the inner surface Pi of the installation target plate. In other words, the housing 100 may be fixed to the installation target plate P by the force F2 by which the inner surface support frame 340 supports the inner surface Pi of the installation target plate and the force F4 by which the outer surface support frame 130 supports the outer surface Po of the installation target plate.

That is, because the two forces F2 and F4 may be generated by the coupling of the housing 100 and the fixer 200, and the two forces F2 and F4 act on both surfaces of the installation target plate P, the housing 100 may be fixed to the installation target plate P.

In summary, the following may be stated. When the first coupling portion 120 and the second coupling portion 210 are coupled, the knob 220 may exert the pushing force F1 on the interposition portion 330, and the wing portion 300 may rotate in the second direction T by the pushing force F1 until the inner surface support frame 340 supports the inner surface Pi of the installation target plate, and the outer surface support frame 130 supports the outer surface Po of the installation target plate and, at the same time, the inner surface support frame 340 supports the inner surface Pi of the installation target plate, thereby the housing 100 may be fixed to the installation target plate P.

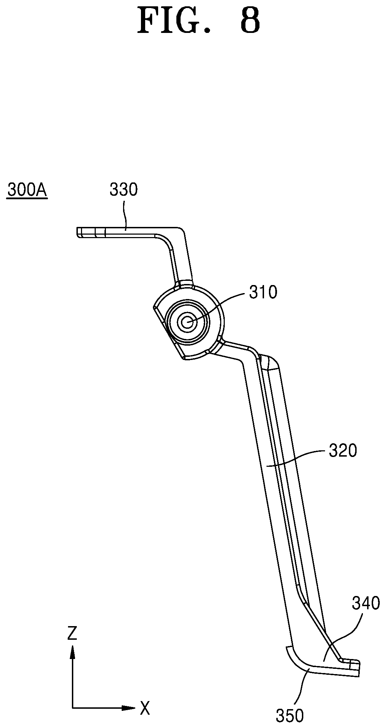

FIG. 8 is a front view showing a wing portion 300A according to another embodiment.

The wing portion 300A may include the shaft 310, the wing portion body 320, the interposition portion 330, the inner surface support frame 340, and an anti-rotation member 350. Among these, the shaft 310, the wing portion body 320, the interposition portion 330, and the inner surface support frame 340 are the same as or similar to those described in the above-described wing portion 300, and thus a detailed description thereof will be omitted and the explanation will focus on the differences.

The anti-rotation member 350 may be provided on a surface of the inner surface support frame 340 facing the inner surface Pi of the installation target plate when the installation of the structure 1 for installing a camera is completed. In an embodiment, referring to FIGS. 5 and 8, the anti-rotation member 350 may be provided on the first portion 340a and the second portion 340b of the inner surface support frame 340. Accordingly, when the second coupling portion 210 is rotated in the first direction K to couple the housing 100 and the fixer 200, the housing 100 may be prevented from rotating together with the fixer 200, thereby allowing smooth coupling of the housing 100 and the fixer 200.

The anti-rotation member 350 may include a material that increases friction with the installation target plate P. In an embodiment, the anti-rotation member 350 may include a rubber material.

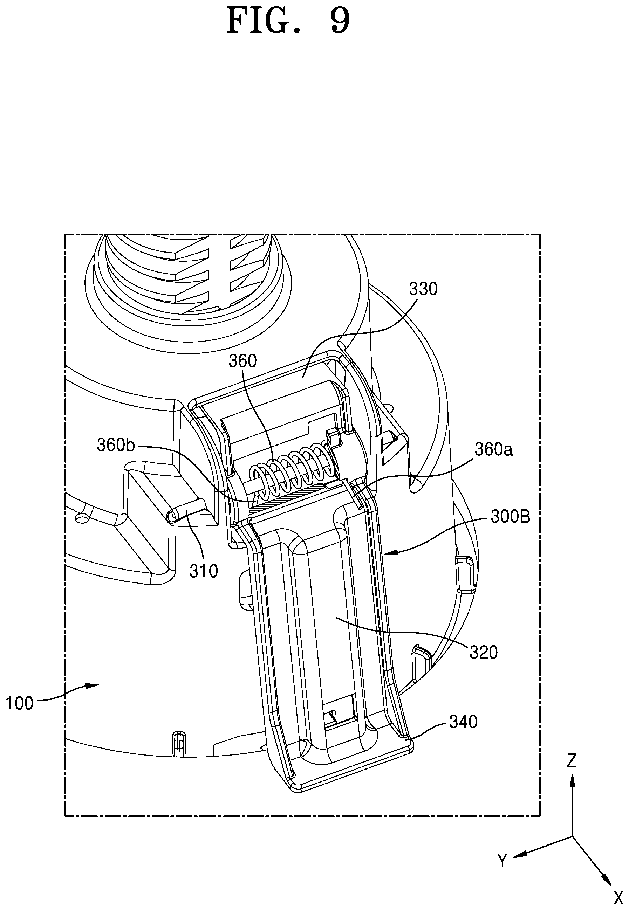

FIG. 9 is a perspective view showing a wing portion 300B provided with an elastic member 360 according to an embodiment.

The wing portion 300B may include the shaft 310, the wing portion body 320, the interposition portion 330, the inner surface support frame 340, and the elastic member 360. Among these, the shaft 310, the wing portion body 320, the interposition portion 330, and the inner surface support frame 340 are the same as or similar to those described in the above-described wing portion 300, and thus a detailed description thereof will be omitted and the explanation will focus on the differences.

The elastic member 360 may generate an elastic force when the wing portion 300 rotates in a direction opposite to the second direction T. In an embodiment, referring to FIG. 9, the elastic member 360 may include a spring. In an embodiment, a first end 360a of the elastic member 360 may be supported on an outer side of the wing portion body 320. A second end 360b of the elastic member 360 may be supported on an inner side of the housing 100.

When the portion of the housing 100 is inserted into the opening H of the installation target plate, the wing portion 300 may need to be rotated in the direction opposite to the second direction T to facilitate the insertion. When the insertion of a portion of the housing 100 into the opening H of the installation target plate is completed, the wing portion 300 may need to be rotated again in the second direction T so that the housing 100 may be fixed to the installation target plate P. When the portion of the housing 100 is completely inserted into the opening H of the installation target plate, the wing portion 300 may automatically rotate in the second direction T by the elastic force of the elastic member 360.

In an embodiment, when the structure 1 for installing a camera A is fixed to the installation target plate P as shown in FIG. 6A, no or very low elastic force may be generated from the elastic member 360. That is, when the installation target plate P has the comparatively small thickness t1 and the housing 100 is fixed to the installation target plate P, the elastic member 360 may reach an equilibrium state so that no elastic force is generated.

Meanwhile, as shown in FIGS. 6B and 6C, when the thickness of the installation target plate P is greater than t1, the elastic force may still be generated from the elastic member 360 even after the housing 100 is fixed to the installation target plate P. At this moment, the elastic force generated from the elastic member 360 may help the inner surface support frame 340 to support the inner surface Pi of the installation target plate.

That is, when the thickness of the installation target plate P is above a certain level, the elastic member 360 may increase the fixing force of the housing 100 to the installation target plate P, so that the housing 100 may be more stably fixed to the installation target plate P.

In an embodiment, the wing portion 300B may include the shaft 310, the wing portion body 320, the interposition portion 330, the inner surface support frame 340, the anti-rotation member 350, and the elastic member 360 altogether.

In an embodiment, the wing portion 300, 300A, 300B may be made at least partly or even entirely of an elastic material. In an embodiment, the wing portion 300, 300A, 300B may at least partly or even entirely be constructed from a spring. Accordingly, due to the elastic force generated from the wing portion itself, the housing 100 may be more stably fixed to the installation target plate P. Alternatively, the wing portion 300, 300A, 300B may be made at least partly or even entirely of a rigid material.

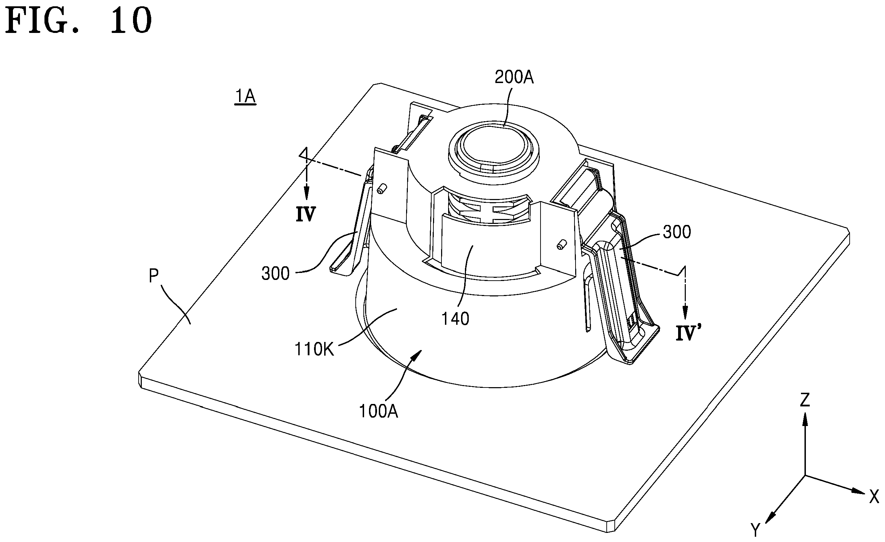

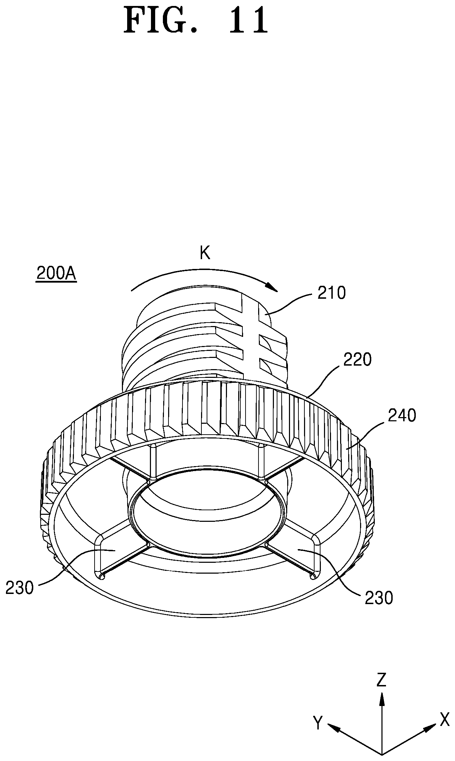

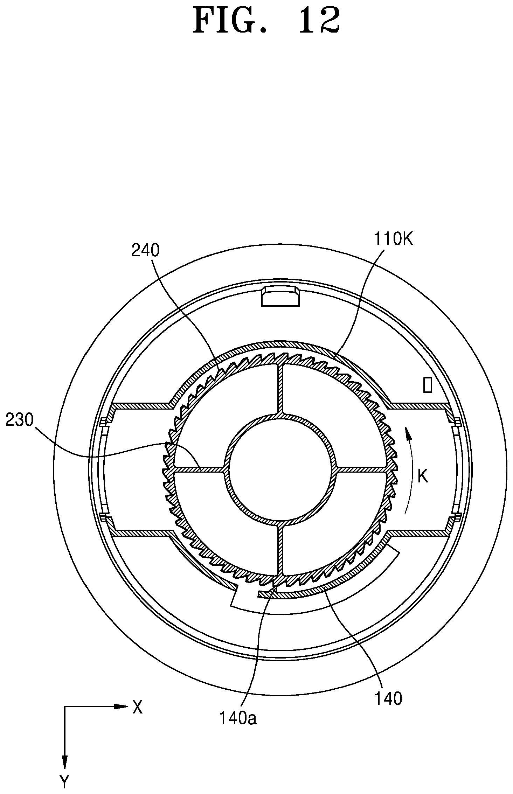

FIG. 10 is a perspective view showing a structure for installing a camera assembly 1A according to an embodiment. FIG. 11 is a perspective view showing a fixer 200A provided with a second unidirectional rotation member 240 an embodiment. FIG. 12 is a cross-sectional view taken along line IV-IV' of FIG. 10, illustrating a principle in which the first unidirectional rotation member 140 and the second unidirectional rotation member 240 operate according to an embodiment.

The camera assembly 1A may at least partly be the structure 1 and/or may include a housing 100A, the fixer 200A, the wing portion 300, the spacer 400, the cover 500 and optionally the camera A. Among these, some components of the housing 100A and the fixer 200A, the wing portion 300, the spacer 400, and the cover 500 are the same as or similar to those described in the above-described structure 1 for installing a camera, and thus a detailed description thereof will be omitted and the differences will be mainly described. The components that are the same as those of structure 1 for installing a camera shown in FIGS. 1 to 9 are indicated by the same reference numerals in FIGS. 10 to 12.

The housing 100A may include a casing 110K, which may also be designated as embedded portion, the first coupling portion 120, the outer surface support frame 130, and the first unidirectional rotation member 140. Among these, the casing 110K, the first coupling portion 120, and the outer surface support frame 130 may be the same as or similar to those described in the above-described housing 100, and thus a detailed description thereof will be omitted.

The first unidirectional rotation member 140 may serve to restrict a rotation of the fixer 200A. For example, the first unidirectional rotation member 140 may serve to restrict the rotation of the fixer 200A, allowing rotation only in the first direction K, and preventing rotation in the opposite direction. Referring to FIG. 10, the first unidirectional rotation member 140 may be connected to the casing 110K. A specific embodiment of the first unidirectional rotation member 140 will be described later.

The fixer 200A may include the second coupling portion 210, the knob 220, the rotation handle 230, and the second unidirectional rotation member 240. Among these, the second coupling portion 210, the knob 220, and the rotation handle 230 may be the same as or similar to those described in the above-described fixer 200, and thus a detailed description thereof will be omitted.

The second unidirectional rotation member 240 may serve to restrict the rotation of the fixer 200A together with the first unidirectional rotation member 140. The second unidirectional rotation member 240 may serve to restrict the fixer 200A, allowing rotation only in the first direction K, and preventing a rotation in the opposite direction. Referring to FIG. 11, the second unidirectional rotation member 240 may be located on an outer surface of the knob 220. The second unidirectional rotation member 240 may correspond to the first unidirectional rotation member 140.

Because the fixer 200A rotates only in the first direction K due to the first unidirectional rotation member 140 and the second unidirectional rotation member 240, the user may easily rotate the fixer 200A in the first direction, thereby facilitating coupling of the housing 100 and the fixer 200. Meanwhile, the first unidirectional rotation member 140 and the second unidirectional rotation member 240 may prevent the fixer 200A from rotating in the opposite direction of the first direction K after the assembly 1A for installing a camera A may be installed on the installation target plate P, thereby preventing the fixed state of the housing 100 from being released.

In an embodiment, referring to FIG. 12, the first unidirectional rotation member 140 may include a pawl 140a. The pawl 140a may protrude toward the second unidirectional rotation member 240. The second unidirectional rotation member 240 may include or be a ratchet wheel. The pawl 140a may restrict rotation of the ratchet wheel, allowing rotation only in the first direction K, and preventing rotation in the opposite direction.

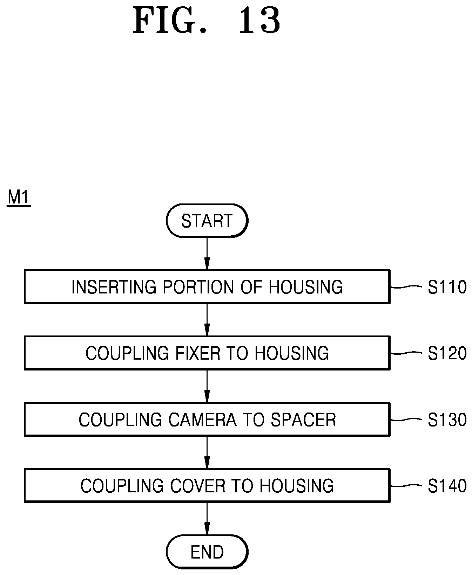

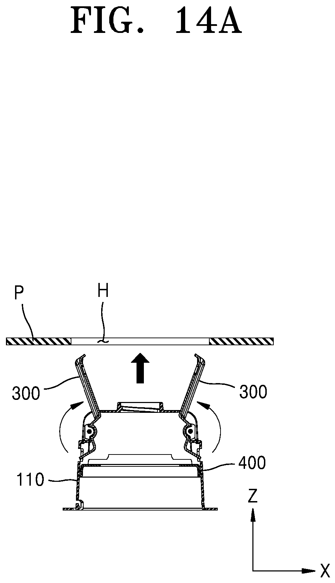

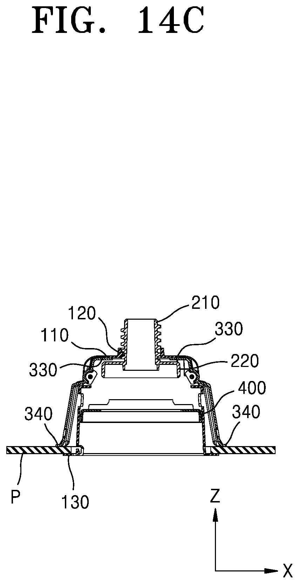

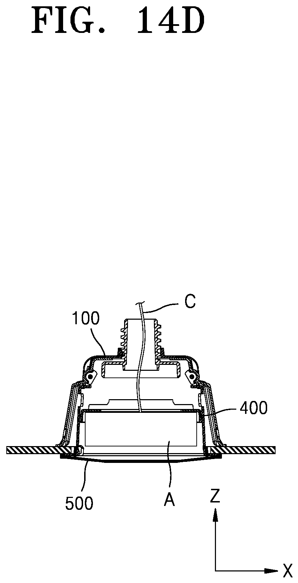

FIG. 13 is a flowchart illustrating a method M1 of installing a camera according to embodiments. FIGS. 14A, 14B, 14C, and 14D are diagrams schematically illustrating respective processes in which the structure 1 for installing a camera is installed on the installation target plate P according to embodiments.

The method M1 of installing a camera refers to a method of installing the structure 1 for installing a camera on the installation target plate P. Referring to FIG. 13, the method M1 of installing a camera A may include inserting the portion of the housing 100 into the opening H of the installation target plate (S110), coupling the fixer 200 to the housing 100 (S120), coupling the camera A to the spacer 400 (S130), and coupling the cover 500 to the housing 100 (S140).

In operation S110 of inserting the embedded portion 110 into the opening H of the installation target plate, the user may first rotate the wing portion 300 toward the opening H of the installation target plate. Referring to FIG. 14A, before inserting the embedded portion 110 into the opening H of the installation target plate, the wing portion 300 may be rotated toward the opening H of the installation target plate, thereby reducing a Z-axis cross-sectional area of the structure 1 for installing a camera A so that the embedded portion 110 may be smoothly inserted into the opening H of the installation target plate.

In operation S110, a user may insert the embedded portion 110 of the housing 100 into the opening H of the installation target plate P until the outer surface support frame 130 of the housing 100 comes into contact with the outer surface Po of the installation target plate P.

In operation S120 of coupling the fixer 200 to the housing 100, the user may first rotate the wing portion 300 in the second direction T, referring to FIG. 14B. For example, the user may rotate the wing portion by releasing the wing portion, such that the wing portion may rotate in the second direction T due to gravity and/or due to elastic forces caused by the elastic member 360. Accordingly, the inner surface support frame 340 of the wing portion 300 may be directed toward the inner surface Pi of the installation target plate. In an embodiment, the user may rotate the wing portion 300 in the second direction T until the inner surface support frame 340 comes into contact with the inner surface Pi of the installation target plate.

In an embodiment, in operation S120, the wing portion 300B may automatically rotate in the second direction T by the elastic member 360.

Referring to FIG. 14B, in operation S120, the user may insert the fixer 200 into the embedded portion 110 through the second end 110b of the casing. At this moment, the second coupling portion 210 of the fixer 200 may be directed in the Z-axis direction.

In operation S120, the interposition portion 330 of the wing portion 300 may be located between the fixer 200 and the housing 100. In a state where the interposition portion 330 is between the fixer 200 and the housing 100, the user may couple the fixer 200 to the housing 100. For example, the user may couple the fixer 200 to the housing 100 by coupling the second coupling portion 210 of the fixer 200 to the first coupling portion 120 of the housing 100. In an embodiment, the first coupling portion 120 and the second coupling portion 210 may be screw-coupled. That is, the housing 100 and the fixer 200 may be coupled together by rotating the second coupling portion 210 in the first direction K.

The user may insert a hand through the second end 110b of the casing and rotate the fixer 200 in the first direction K by using the rotation handle 230 of the fixer 200. Accordingly, the housing 100 may be easily fixed to the installation target plate P without requiring a separate tool.

Referring to FIG. 14C, in operation S120, the coupling of the fixer 200 to the housing 100 may be performed until the inner surface support frame 340 of the wing portion 300 supports or contacts or rests on the inner surface Pi of the installation target plate P and, at the same time, the outer surface support frame 130 supports or contacts or rests against the outer surface Po of the installation target plate P. The housing 100 may be fixed to the installation target plate P as the inner surface support frame 340 supports the inner surface Pi of the installation target plate P and, at the same time, the outer surface support frame 130 supports the outer surface Po of the installation target plate P. The principle by which the housing 100 is fixed to the installation target plate P has been described with reference to FIGS. 7A and 7B, and will thus be omitted.

Meanwhile, referring to FIG. 14A, the spacer 400 may be pre-coupled to the housing 100. For example, the spacer 400 may be pre-fixed inside the embedded portion 110.

Referring to FIG. 13 and FIG. 14D, the user may couple the camera A to the spacer 400 (S130). The method of coupling the camera A to the spacer 400 is not particularly limited. In operation S130, the cable C connected to the camera A may extend from the inside to the outside of the housing 100 through an open portion of the spacer 400 facing the fixer 200 and the hole 210H of the second coupling portion 210.

Referring to FIG. 13 and FIG. 14D, the user may couple the cover 500 to the housing 100 (S140).

The structure 1 or the assembly 1A for installing a camera and the method M1 for installing a camera may allow manual operation when fixing the housing 100 to the installation target plate P and enable the camera A to be easily installed on the installation target plate P without requiring a separate tool.

The structure 1 or 1A for installing a camera and the method M1 for installing a camera may be structurally simple and reduce installation time because the housing 100 may be fixed to the installation target plate P only by coupling the fixer 200 to the housing 100.

Although the disclosure has been described with reference to the embodiments shown in the drawings, these are merely examples. It will be readily understood by those skilled in the art that various modifications may be made based on the embodiments. Accordingly, the true technical scope of protection of the disclosure is defined based on the appended claims.

The specific technical contents described in the embodiments are merely examples and do not limit the technical scope of the embodiments. In order to describe the disclosure concisely and clearly, descriptions of conventional general techniques and configurations may be omitted. In addition, the lines connecting components shown in the drawings or connecting members are intended to exemplify functional and/or physical or circuit connections, and may be replaced or expressed by various additional functional, physical, or circuit connections in actual devices. Also, unless specifically stated as "essential," "important," or the like, a component may not necessarily be required.

The embodiments are not necessarily limited to the described order of operations. The use of all examples or exemplary terms (such as "for example," and the like) in the embodiments is solely for describing the embodiments in detail and is not intended to limit the scope of the embodiments unless stated in the claims. Also, a person having ordinary skill in the art will appreciate that various modifications, combinations, and changes may be made according to design requirements and factors within the scope of the appended claims or equivalents thereof.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A structure (1) for installing a camera, the structure (1) comprising:
a housing (100);
a wing portion (300) connected to the housing (100); and
a fixer (200) configured to be coupled to the housing (100),
wherein the housing (100) comprises:
an embedded portion (110) insertable into an opening of an installation target plate;
and
an outer surface support frame (130) protruding from the embedded portion (110) and configured to press an outer frame of the installation target plate,
wherein the wing portion (300) comprises:
a wing portion body (320);
an interposition portion (330) connected to a first end of the wing portion body (320); and
an inner surface support frame (340) connected to a second end of the wing portion body (320) and configured to press an inner frame of the installation target plate, and
wherein, in a state in which the embedded portion (110) is inserted into the opening of the installation target plate, the housing (100) is coupled to the fixer (200), the interposition portion (330) is between the fixer (200) and the housing (100), and the outer surface support frame (130) and the inner surface support frame (340) press the installation target plate.

2. The structure (1) of claim 1, wherein the housing (100) further comprises:
a first coupling portion (120) comprising a hole (120h) at a first end (110a) of the embedded portion (110), and
wherein a cross-section of the hole (120h) of the first coupling portion (120) is smaller than a cross-section of a second end (110b) of the embedded portion (110).

3. The structure (1) of claim 2, wherein the fixer (200) comprises:
a second coupling portion (210) comprising a protrusion configured to pass through the hole (120h) of the first coupling portion (120) and couple with the first coupling portion (120); and
a knob (220) at a base of the second coupling portion (210) and having a cross-section that is larger than a cross-section of the second coupling portion (210).

4. The structure (1) of claim 3, wherein, in a state in which the second coupling portion (210) is being coupled with the first coupling portion (120), the knob (220) is configured to move away from the installation target plate.

5. The structure (1) of claim 3 or 4, wherein, the first coupling portion (120) is configured to be screw-coupled with the second coupling portion (210), and
wherein, in a state in which the fixer (200) is rotated in a first direction, the knob (220) is configured to move away from the installation target plate.

6. The structure (1) of any of claims 1 to 5, wherein the fixer (200) comprises a hole (210H) therethrough in coupling direction.

7. The structure (1) of any of claims 1 to 6, wherein the wing portion (300) further comprises a shaft (310) connected to the housing (100), and is configured to be rotatable about the shaft (310).

8. The structure (1) of any of claims 1 to 6, wherein the wing portion (300) further comprises:
a shaft (310) connected to the housing (100),
wherein the wing portion body (320) is connected to a first end of the shaft (310), and is extended outwardly from the housing (100), and
wherein the interposition portion (330) is connected to a second end of the shaft (310) and protruding inwardly from the housing (100).

9. The structure (1) of any of claims 1 to 8, wherein the inner surface support frame (340) is bent from the wing portion body (320) at an obtuse angle (a) with respect to the wing portion body (320).

10. The structure (1) of any of claims 1 to 9, wherein the inner surface support frame (340) comprises a rounded portion (340a) connected to the wing portion body (320).

11. The structure (1) of any of claims 3 to 10, wherein the knob (220) is integrally formed with the second coupling portion (210).

12. The structure (1) according to any of claims 1 to 11, wherein a cross-section of the outer surface support frame (130) is larger than a cross-section of the opening of the installation target plate.

13. The structure (1) according to any of claims 1 to 12, wherein based on the fixer (200) pressing on the first end of the wing portion (300), a second end of the wing portion (300) presses an inner surface of the installation target plate, and an end of the housing (100) is pressed on an outer surface of the installation target plate.

14. The structure (1) of any of claims 3 to 13, wherein, in a state in which the first coupling portion (120) of the housing (100) and the second coupling portion (210) of the fixer (200) are coupled to each other, based on the knob (220) of the fixer (200) pressing on the interposition portion (330) of the wing portion (300), the wing portion (300) rotates in a second direction and the inner surface support frame (340) of the wing portion (300) presses the inner surface of the installation target plate, the outer surface support frame (130) of the housing (100) presses the outer surface of the installation target plate, and the housing (100) is fixed to the installation target plate.

15. A method (M1) of installing a structure (1) for installing a camera, the method comprising:
inserting (S110) an embedded portion (110) of a housing (100) of the structure (1) into an opening (H) of an installation target plate (P) until an outer surface support frame (130) of the housing (100) contacts an outer surface of the installation target plate (P), and rotating a wing portion (300) of the structure (1) toward the opening of the installation target plate (P); and
coupling (S120) a fixer (200) of the structure (1) to the housing (100) until an inner surface support frame (340) of the wing portion (300) presses an inner surface of the installation target plate (P) and the outer surface support frame (130) presses the outer surface of the installation target plate (P), wherein an interposition portion (330) of the wing portion (300) is located between the fixer (200) and the housing (100).
